# EUROPÄISCHE PATENTSCHRIFT

(11) **EP 2 779 271 B1**
(45) Veröffentlichungstag und Bekanntmachung des Hinweises auf die Patenterteilung: **19.07.2017**
(21) Anmeldenummer: 14151970.2
(22) Anmeldetag: 21.01.2014
(51) Int. Cl.: H01M 2/02, H01M 2/34, H01M 2/30, H01M 2/26, H01M 10/0525

(54) **Sicherheitselement für Batteriezelle**
Safety element for battery cell
Élément de sécurité pour cellule de batterie

(30) Priorität: 13.03.2013 DE 102013204341
(43) Veröffentlichungstag der Anmeldung: 17.09.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: Kohlberger, Markus, 70174 Stuttgart (DE)
(74) Vertreter: Bee, Joachim

(56) Entgegenhaltungen:
- EP-A1- 2 385 567
- EP-A1- 2 403 036
- EP-A1- 2 838 138
- EP-A2- 2 487 735
- EP-A2- 2 515 362
- US-A- 5 707 756
- US-B1- 6 228 523

## Beschreibung

### Stand der Technik

Als Traktionsbatterien für Fahrzeuge, die einen elektrischen Antrieb aufweisen, kommen Lithium-Ionen-Batteriezellen zum Einsatz. Mehrere Lithium-Ionen Batteriezellen sind zu einem Batteriemodul verschaltet. Die einzelnen Lithium-Ionen-Batteriezellen umfassen mindestens eine Elektrode, die Lithium-Ionen (Li⁺) einlagern kann (Interkalation) oder wieder auslagern kann (Deinterkalation).

DE 10 2008 063 136 A1 offenbart ein Verfahren und eine Vorrichtung zum Schutz einer Lithium-Ionen-Batterie bei thermischer und/oder elektrischer Überlastung infolge einer Fehlfunktion, beispielsweise eines Kurzschlusses oder einer Überladung. Die Lösung gemäß DE 10 2008 063 136 A1 ist in einem Hybridfahrzeug oder einem Elektrofahrzeug einsetzbar. Eine Batterieelektronik überwacht den Betriebszustand der Lithium-Ionen Batterie hinsichtlich des Stromwertes, des Spannungswertes der Temperatur und des Zellinnendruckes. Bei Überschreiten hinterlegter Grenzwerte wird die Lithium-Ionen-Batterie mittels einer Trenneinrichtung vom Bordnetz des Fahrzeugs abgetrennt. Die Trenneinrichtung ist zwischen der Lithium-Ionen-Batterie und dem Bordnetz angeordnet, wobei die Trenneinrichtung als Relais, reversible Sicherung oder pyrotechnischer Schalter ausgebildet sein kann. Die Trenneinrichtung ist in einen Strompfad integriert, wobei bei Aktivierung der Strompfad und damit der Stromfluss unterbrochen wird.

DE 10 2010 049 611 A1 offenbart eine Batteriemoduleinheit für Fahrzeuge, umfassend eine Vielzahl von in Reihe geschalteter Batterieeinzelzellen, welche im Falle einer Störung an vorgesehenen Sollbruchstellen durch eine Sicherheitseinrichtung in Untermodule getrennt werden, deren Netzspannung unterhalb einer kritischen Spannung liegt. Die Sicherheitseinrichtung umfasst eine Vielzahl gleicher oder verschiedenartig ausgebildeter Trennmittel, welche von einer Steuereinheit aktiviert werden, wobei eine mechanische Schädigung zumindest einer Einzelzelle direkt oder indirekt über darauf hinweisende Größen detektiert wird, beispielsweise durch einen Crash- oder Airbag-Sensor.
DE 10 2010 036 379 A1 bezieht sich auf eine Hochvoltbatterie für Hybrid- oder Elektrofahrzeuge, umfassend untereinander verbundene Batteriemodule, wobei Trennmittel vorgesehen sind, welche im Normalbetrieb außerhalb einer elektrischen Verbindung angeordnet sind. Dadurch wird kein zusätzlicher elektrischer Widerstand dargestellt. Ein von Unfallsensoren detektierter Unfall löst eine Aktivierung des Trennmittels aus. Das Dokument EP 2 487 735 A2 offenbart ein weiteres aus dem Stand der Technik bekanntes galvanisches Element. Im Rahmen der Lithium-Ionen-Batteriezellen-Technik hat sich das Überladeverhalten der Lithium-Ionen-Batteriezellen, bzw. der fertig verschalteten Lithium-Ionen-Batterie, man spricht in diesem Zusammenhang auch von Batteriemodul, als kritisch erwiesen. Werden Lithium-Ionen-Batteriezellen über die maximal zulässige Spannung hinaus aufgeladen, kommt es zu einer Schädigung der Zelle bis hin zu einem Vorgang der auch als Thermal Runaway bezeichnet wird. Bei einem derartigen "Durchgehen" der Batteriezelle kann es zum Öffnen der Zelle kommen, sogar ein Bersten bis hin zur Explosion der Batteriezelle kann eintreten. Ein derartiges "Durchgehen" der Batteriezelle stellt den größten anzunehmenden Unfall im Zusammenhang mit Lithium-Ionen-Batteriezellen dar.
Durch Sicherheitseinrichtungen wie beispielsweise Schmelzsicherungen wird der Überladevorgang zwar gestoppt, da der Spannungsabfall bzw. der auftretende Kurzschluss vom Batteriemanagementsystem der Batterie erkannt wird bzw. durch den Kurzschluss des Ladegerätes der Ladevorgang unterbrochen wird. Falls jedoch der Strom weiterfließt, besteht die Gefahr, dass das Material der Membran der Überladungsschutzeinrichtung (OSD) durchschmilzt. In diesem Falle fließt wieder Strom in die Batteriezelle, oder es bildet sich ein neues galvanisches Element, die bisherige Anode umfassend gegen das aus Aluminium gefertigte Gehäuse der Batteriezelle. Dies wiederum ermöglicht das Auftreten von Spannungsüberschlägen oder die Elektrolyse, bei der sich ein Dendritenwachstum im Inneren der Batteriezelle einstellt. Je nach dem Spannungsniveau führt dies direkt zu einem Lichtbogen, es besteht weiter die Möglichkeit, dass sich ein Kurzschluss bildet, die Reaktion erneut startet und zu einem Brand führen kann. Die Abschirmung der Elektroden des Elektrodenensembles zueinander ist nur schwer möglich, da das gesamte Zellgehäuse als eine Elektrode wirkt.

Auch bei Auftreten eines externen Kurzschlusses löst die bisher eingesetzte Schmelzsicherung aus und trennt so das Elektrodenensemble ab. Es bildet sich hier unmittelbar ein neues galvanisches Element, d.h. die bisherige Anode umfassend gegen das aus Aluminium gefertigte Batteriezellengehäuse. Das Spannungsniveau der restlichen, möglicherweise noch intakten Batteriezellen liegt nun dort an, was zu dem gleichen Verhalten wie oben stehend beschrieben führt. Versuche, die Schmelzsicherung in den negativen Kollektor, der in der Regel aus Kupfer gefertigt wird zu integrieren, sind fehlgeschlagen.

### Darstellung der Erfindung

Die Erfindung wird durch den Gegenstand des Anspruchs 1 definiert. Erfindungsgemäß wird vorgeschlagen, ein galvanisches Element, insbesondere eine Lithium-Ionen-Batteriezelle, die ein Gehäuse, ein Minus-Terminal, ein Plus-Terminal und diesen jeweils zugeordnete Kollektoren umfasst, derart auszugestalten, dass das Gehäuse als ein Edelstahlgehäuse ausgebildet ist, welches auf Negativpotential oder auf neutralem Potential liegt. Während bisher eingesetzte Hardcase-Gehäuse aus Aluminium gefertigt sind, welches eine elektrische Leitfähigkeit in der Größenordnung von 36,59 x 10⁶ S/m aufweist, weisen erfindungsgemäß eingesetzte Edelstahlgehäuse eine elektrische Leitfähigkeit auf, die in der Größenordnung von 1,4 x 10⁶ S/m liegt. Ferner sind aus Edelstahl gefertigte Gehäuse, die im Rahmen der Lithium-Ionen-Technik eingesetzt werden, einerseits erprobt und nicht teurer als aus Aluminium gefertigte Gehäuse zur Aufnahme von Batteriezellen.

In einer vorteilhaften Ausführungsmöglichkeit ist das Minus-Terminal der Batteriezelle und ein diesem zugeordneter Kollektor oder Stromsammler, der ein Elektrodenensemble im Inneren des Gehäuses mit dem Minus-Terminal verbindet, aus Kupfer (Cu) gefertigt, während ein Plus-Terminal der Batteriezelle und ein diesem zugeordneter Kollektor bzw. Stromsammler, aus Aluminium (Al) gefertigt sind.

Das erfindungsgemäß vorgeschlagene galvanische Element umfasst in dem Stromsammler oder Kollektor, der den Plus-Terminal zugeordnet ist und der vorteilhaft aus Aluminium gefertigt ist, eine Schmelzsicherung. Bei einem Kurzschluss schmilzt die Schmelzsicherung durch, so dass der Stromfluss zwischen Elektrodenensemble und dem Plus-Terminal unterbrochen ist. Mögliche Lichtbögen oder mögliches Dendritenwachstum sind nur im oberen Teil des Terminals, welches nicht auf dem Potential des Edelstahlgehäuses liegt, bei der erfindungsgemäßen Lösung das Plus-Terminal, bis hin zur Schmelzsicherung möglich. Der obere Teil der Schmelzsicherung lässt sich durch den Einsatz eines Kunststoffteiles abschirmen. Bei der erfindungsgemäß vorgeschlagenen Lösung, bei welcher das Edelstahlgehäuse des galvanischen Elementes auf Negativpotential, bzw. auf neutralem Potential liegt, ist die Überladungsschutzeinrichtung (OSD = Overcharge Safety Device) derart ausgebildet, dass die in das Edelstahlgehäuse integrierte Membran ebenfalls aus Edelstahlmaterial oder aus Nickel gefertigt ist. Die Schmelzsicherung, die dem Stromsammler bzw. dem Kollektor zugeordnet ist, der mit dem Plus-Terminal des galvanischen Elementes verbunden ist, ist beispielsweise durch eine Querschnittsschwächung im Kollektor bzw. im Stromsammler, mit dem das Elektrodenensemble kontaktiert wird, gegeben. Bei der Querschnittsschwächung kann es sich um eine Öffnung im Material des Kollektors handeln, die insbesondere schlitzförmig ausgebildet ist.

In einer vorteilhaften Ausführungsvariante des der Erfindung zugrundeliegenden Gedankens besteht die Möglichkeit, im Gehäuse aus Edelstahl des galvanischen Elementes dieses auf neutrales Potential zu legen und zwei Membranen, die durch einen im Innenraum des Gehäuses auftretenden Druck verformt werden, als Überladungssicherungseinrichtung an jedem der Anschlussterminals, d.h. dem Plus-Terminal und dem Minus-Terminal zuzuordnen.

### Vorteile der Erfindung

Die erfindungsgemäß vorgeschlagene Lösung für das Gehäuse eines galvanischen Elementes bzw. eine in diesem integrierte Überladungsschutzeinrichtung greift auf ein Edelstahlgehäuse zurück, das bereits im Einsatz erprobt ist und hinsichtlich der Kosten nicht teurer ist als bisher eingesetzte Aluminiumgehäuse. Bei einem auftretenden Kurzschluss schmilzt die Schmelzsicherung, die im Kollektor, der mit dem Plus-Terminal des galvanischen Elementes verbunden ist, durch, so dass der Stromfluss zwischen Plus-Terminal und Elektrodenensemble unterbrochen wird. Mögliche Lichtbögen oder ein Dendritenwachstum sind nur im oberen Teil des Terminals bis hin zur Schmelzsicherung möglich, wobei diese durch ein Kunststoffteil abgeschirmt ist. Dabei handelt es sich insbesondere um den Bereich des Kollektors bzw. des Stromsammlers, der vor der Schmelzsicherung liegt und der weiterhin mit dem Terminal nach außen verbunden ist. Durch das Aufschmelzen der Schmelzsicherung ist der restliche Teil des Kollektors oder Stromsammlers, der mit dem Elektrodenensemble verbunden ist, nicht mehr mit dem Plus-Terminal verbunden, die elektrische Verbindung ist unterbrochen.

Die erfindungsgemäß in das Edelstahlgehäuse integrierte Überladungsschutzeinrichtung umfasst mindestens eine Membran, die aus Edelstahl oder aus Nickel gefertigt sein kann. Die genannten Materialien weisen höhere Schmelzpunkte auf, als die bisher eingesetzten Materialien von Membranen für Überladungsschutzeinrichtungen. Generell ist in der Kombination aus Edelstahlgehäuse mit Plus-Terminal aus Aluminium gefertigt, der erfindungsgemäß vorgeschlagenen Lösung, das Dendritenwachstum verzögert.

### Kurze Beschreibung der Zeichnungen

Anhand der Zeichnung wird die Erfindung nachstehend eingehender beschrieben.

Es zeigen
- Figur 1: eine erfindungsgemäß vorgeschlagene Ausführungsmöglichkeit eines Gehäuses für eine galvanische Zelle,
- Figur 2: das Ansprechen einer Überladungsschutzeinrichtung, eine verformbare Membran enthaltend und
- Figur 3: eine schematische Darstellung einer in einem Stromsammler bzw. Kollektor ausgebildeten Schmelzsicherung.

### Ausführungsvarianten

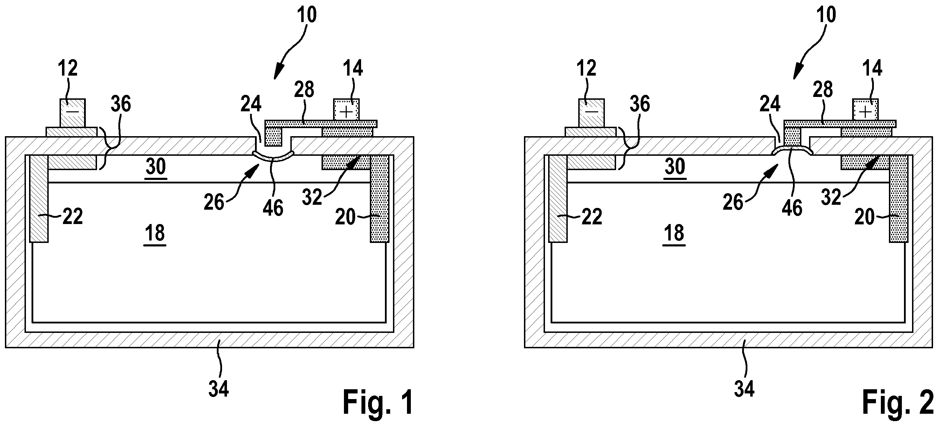

Der Darstellung gemäß Figur 1 ist eine erste Ausführungsvariante des erfindungsgemäß vorgeschlagenen galvanischen Elementes zu entnehmen, welches eine Überladungsschutzeinrichtung (Overcharge Safety Device ≙ OSD) aufweist.

In Figur 1 ist das galvanische Element 10 dargestellt, bei dem es sich bevorzugt um eine Lithium-Ionen-Batteriezelle handelt. In der Ausführungsvariante gemäß Figur 1 ist das Gehäuse des galvanischen Elementes als Edelstahlgehäuse 34 ausgebildet. Das Edelstahlgehäuse 34 des galvanischen Elementes 10 gemäß der Darstellung in Figur 1 liegt auf Negativpotential oder auf neutralem Potential. Ein Minus-Terminal 12 des galvanischen Elementes 10 ist aus Kupfer gefertigt. Im Gegensatz zum Minus-Terminal 12, ist ein Plus-Terminal 14 des galvanischen Elementes 10 gemäß der Darstellung in Figur 1 aus Aluminium (Al) gefertigt. Das Edelstahlgehäuse 34 liegt - hier angedeutet durch Bezugszeichen 36 - auf Negativpotential oder auf neutralem Potential. Das Edelstahlgehäuse 34 umfasst darüber hinaus eine Öffnung 24, in der eine Edelstahl- oder Nickelmembran 46 eingelassen ist. Die Edelstahl- oder Nickelmembran 46 ist durch einen im Innenraum 30 des Edelstahlgehäuses 34 bei einer Havarie oder einem Unfall entstehenden Überdruck verformbar und kann - wie in Zusammenhang mit Figur 2 angedeutet - derart nach außen gewölbt werden, dass ein Fortsatz 28 des aus Aluminium gefertigten Plus-Terminals 14 kontaktiert wird und dort ein Kurzschluss entsteht.

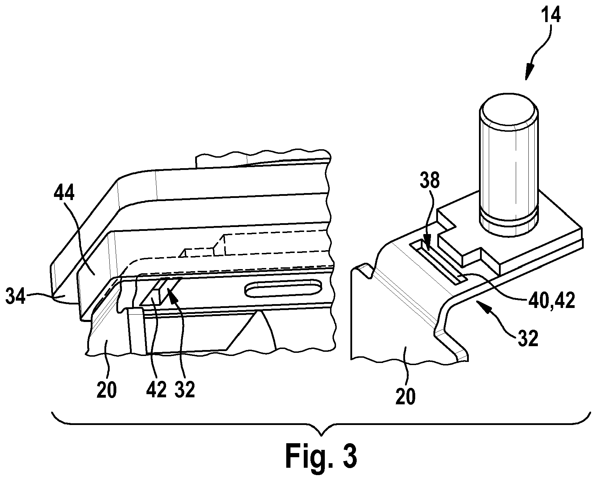

Bei Auftreten eines Kurzschlusses schmilzt die Schmelzsicherung 32, die in dem Kollektor oder Stromsammler 20 aus Aluminium angeordnet ist, über den das Elektrodenensemble 18 des galvanischen Elementes 10 mit dem Plus-Terminal 14 in Verbindung steht. Im Falle eines Aufschmelzens der Schmelzsicherung 32 wird der Stromfluss in das galvanische Element 10 unterbrochen, da nunmehr das Elektrodenensemble 18 hinter der Schmelzsicherung 32 zum Edelstahlgehäuse 34 isoliert ist. Im Falle eines Kurzschlusses stellt sich ein Kurzschlussstromflusspfad ein, der vom Minus-Terminal 12 über den Deckel des Edelstahlgehäuses 34, die darin integrierte nach außen aufgewölbte Edelstahlmembran oder Nickelmembran 46 zum Plus-Terminal 14 verläuft. Oberhalb der Schmelzsicherung 32 befindet sich eine, beispielsweise aus Kunststoffmaterial gefertigte Abschirmung 44 (vergleiche Darstellung gemäß Figur 3).

Entsteht beim Laden des galvanischen Elementes 10 beispielsweise durch ein fehlerhaftes Ladegerät oder dergleichen, eine Überladung, entsteht im Innenraum 30 des Edelstahlgehäuses 34 ein Überdruck, der die Edelstahl-/Nickelmembran 46 der Überladungsschutzeinrichtung 26 nach außen wölbt, so dass der ambossartige Vorsprung, der Fortsatz 28, der am aus Aluminium gefertigten Plus-Terminal 14 ausgebildet ist, kontaktiert wird und ein Kurzschluss auftritt.

Die Schmelzsicherung 32 wird bevorzugt als Querschnittsschwächung 38, vergleiche Darstellung gemäß Figur 3, ausgebildet. Bevorzugt ist die Schmelzsicherung 32 in den Kollektor oder Stromsammler 20 integriert, der mit dem Plus-Terminal 14 verbunden ist und aus Aluminium gefertigt ist. Der Werkstoff Aluminium hat in diesem Zusammenhang den Vorteil, dass dieser bei relativ niedriger Temperatur aufschmilzt, jedoch durch die Oxidschicht kein Abtropfen von Schmelzmaterial erfolgt und dieses Material insbesondere nicht glüht. Die Vermeidung des Glühens reduziert die Gefahr einer Entzündung des Elektrolyten, der im Elektrodenensemble 18 vorhanden ist, erheblich.

Da bei der erfindungsgemäß vorgeschlagenen Lösung - vergleiche Darstellung gemäß der Figuren 1 und 2 - eine Edelstahlmembran oder eine Nickelmembran 46 als Teil der Überladungsschutzeinrichtung 26 eingesetzt wird, welches einen erheblich höheren Schmelzpunkt aufweist, ist die Gefahr, dass die Edelstahlmembran 46 oder Nickelmembran 46 durchschmilzt, erheblich verringert, so dass verhindert wird, dass wieder Strom in das galvanische Element 10 fließt oder sich ein neues galvanisches Element, die bisherige Anode und das Gehäuse 34 umfassend, bildet. Durch die erfindungsgemäß vorgeschlagene Maßnahmen kann vermieden werden, dass es im Innenraum 30 des Edelstahlgehäuses 34 zu Spannungsüberschlägen kommt, ferner kann das Auftreten der Elektrolyse einhergehend mit einem Dendritenwachstum im Inneren des Edelstahlgehäuses 34 wirksam unterbunden werden.

Figur 3 zeigt in schematischer Weise die im positiven Kollektor ausgebildete Schmelzsicherung.

Der positive Kollektor 20 ist mit dem Plus-Terminal 14 verbunden. Bevorzugt ist diese Anordnung aus Plus-Terminal 14 und positivem Kollektor 20 einstückig und aus Aluminium gefertigt. Die Schmelzsicherung 32 ist in der Ausführungsvariante gemäß Figur 3 als Materialschwächung 38 in Form eines Längsschlitzes 42 ausgebildet. Anstelle der Schlitzform 42 sind selbstverständlich auch andere Geometrien für die Öffnung 40 möglich, die eine Materialschwächung 38 darstellen.

Bisher eingesetzte Membranen 46, die nicht aus Nickel oder nicht aus Edelstahl gefertigt werden, sondern beispielsweise aus Aluminium, können bei dem Auftreten von hohen Kurzschlussströmen aufschmelzen. Bei der erfindungsgemäß vorgeschlagenen Ausführung wird die Edelstahlmembran 46 oder die Nickelmembran 46, welche nicht zwangsläufig die gleiche Metalllegierung aufweist wie das Edelstahlgehäuse 34 selbst, eingesetzt, welche den elektrischen Widerstand erhöht und daher einen geringeren Stromfluss zulässt sowie einen höheren Schmelzpunkt aufweist. Durch die genannten Parameter ist die Zuverlässigkeit des erfindungsgemäß vorgeschlagenen galvanischen Elementes 10, insbesondere ausgebildet als Lithium-Ionen-Batterie erheblich verbessert. Außerdem besteht bei bisher eingesetzten Membranen 46, die aus Aluminiummaterial gefertigt werden das Problem, dass eine derartige Membran bei auftretender Feuchtigkeit von außen korrodiert oder oxidiert. Durch die erfindungsgemäß vorgeschlagene Materialwahl wird dieser Verschleißerscheinung ebenfalls entgegengewirkt.

Aus der Darstellung gemäß Figur 3 geht des Weiteren hervor, dass die als Längsschlitz 42 ausgebildete Schmelzsicherung 32 von einer aus Kunststoffmaterial gefertigten Abschirmung 44 überdeckt ist.

## Patentansprüche

1. Galvanisches Element, insbesondere eine Lithium-Ionen-Batteriezelle (10), mit einem Gehäuse (34), einem Minus-Terminal (12), einem Plus-Terminal (14) und diesen jeweils zugeordnete Kollektoren (20, 22), wobei das Gehäuse (34) ein Edelstahlgehäuse (34) ist, das auf Negativpotential (36) oder auf neutralem Potential liegt, **dadurch gekennzeichnet, dass** das Gehäuse (34) eine Überladungsschutzeinrichtung aufweist, die derart ausgebildet ist, dass eine in das Edelstahlgehäuse (34) integrierte Membran (46) aus Edelstahlmaterial oder aus Nickel gefertigt ist, wobei das galvanische Element eine Schmelzsicherung (32) umfasst, die dem Kollektor (20) zugeordnet ist, der mit dem Plus-Terminal (14) des galvanischen Elements verbunden ist.

2. Galvanisches Element gemäß Anspruch 1, **dadurch gekennzeichnet, dass** das Minus-Terminal (12) und ein diesem zugeordneter Kollektor (22) aus Cu gefertigt sind.

3. Galvanisches Element gemäß Anspruch 1, **dadurch gekennzeichnet, dass** das Plus-Terminal (14) und ein diesem zugeordneter Kollektor (20) aus Al gefertigt sind.

4. Galvanisches Element gemäß dem vorhergehenden Anspruch, **dadurch gekennzeichnet, dass** das Edelstahlgehäuse (34) eine Öffnung (24) aufweist, in der sich die verformbare Membran (46) befindet.

5. Galvanisches Element gemäß einem der vorhergehenden Ansprüche, **dadurch gekennzeichnet, dass** die Schmelzsicherung (32) durch eine Querschnittsschwächung (38) in Form einer Öffnung (40) in dem Kollektor (20) ausgebildet ist, der mit dem Plus-Terminal (14) des galvanischen Elementes (10) verbunden ist.

6. Galvanisches Element gemäß dem vorhergehenden Anspruch, **dadurch gekennzeichnet, dass** die Öffnung (40) als Längsschlitz (42) ausgeführt ist.

7. Galvanisches Element gemäß einem der vorhergehenden Ansprüche, **dadurch gekennzeichnet, dass** sowohl dem Minus-Terminal (12) als auch dem Plus-Terminal (14) im Edelstahlgehäuse (34) jeweils eine verformbare Edelstahl-/Nickelmembran (46) zugeordnet ist, und jedem der Terminals (12, 14) eine Überladungsschutzeinrichtung (26) zugeordnet ist.

## Claims

1. Galvanic element, in particular a lithium-ion battery cell (10), comprising a housing (34), a negative terminal (12), a positive terminal (14) and collectors (20, 22) associated with each of said terminals, wherein the housing (34) is a stainless steel housing (34) which is at a negative potential (36) or at neutral potential, **characterized in that** the housing (34) has an overcharge safety device which is designed in such a way that a membrane (46) integrated in the stainless steel housing (34) is manufactured from stainless steel material or from nickel, wherein the galvanic element comprises a fuse (32) which is associated with the collector (20), which is connected to the positive terminal (14) of the galvanic element.

2. Galvanic element according to Claim 1, **characterized in that** the negative terminal (12) and a collector (22) associated therewith are manufactured from Cu.

3. Galvanic element according to Claim 1, **characterized in that** the positive terminal (14) and a collector (20) associated therewith are manufactured from Al.

4. Galvanic element according to the preceding claim, **characterized in that** the stainless steel housing (34) has an opening (24), in which the deformable membrane (46) is located.

5. Galvanic element according to one of the preceding claims, **characterized in that** the fuse (32) is formed by an area of weakened cross section (38) in the form of an opening (40) in the collector (20) which is connected to the positive terminal (14) of the galvanic element (10).

6. Galvanic element according to the preceding claim, **characterized in that** the opening (40) is in the form of a slot (42).

7. Galvanic element according to one of the preceding claims, **characterized in that** in each case a deformable stainless steel/nickel membrane (46) is associated both with the negative terminal (12) and with the positive terminal (14) in the stainless steel housing (34), and an overcharge safety device (26) is associated with each of the terminals (12, 14).

## Revendications

1. Elément galvanique, en particulier, cellule de batterie au lithium-ion (10), comportant un boîtier (34), une borne moins (12), une borne plus (14) et des collecteurs (20, 22) respectivement associés à celles-ci, dans lequel le boîtier (34) est un boîtier en acier inoxydable (34) qui se trouve à un potentiel négatif (36) ou à un potentiel neutre, **caractérisé en ce que** le boîtier (34) comporte un dispositif de protection contre la surcharge qui est réalisé de telle manière qu'une membrane (46) intégrée au boîtier en acier inoxydable (34) soit réalisée en acier inoxydable ou en nickel, dans lequel l'élément galvanique comprend un fusible de sécurité (32) qui est associé au collecteur (20) et est relié à la borne plus (14) de l'élément galvanique.

2. Elément galvanique selon la revendication 1, **caractérisé en ce que** la borne moins (12) et un collecteur (22) associé à celle-ci sont constitués de Cu.

3. Elément galvanique selon la revendication 1, **caractérisé en ce que** la borne plus (14) et un collecteur (20) associé à celle-ci sont constitués d'Al.

4. Elément galvanique selon la revendication précédente, **caractérisé en ce que** le boîtier en acier inoxydable (34) présente une ouverture (24) dans laquelle se trouve la membrane déformable (46).

5. Elément galvanique selon l'une quelconque des revendications précédentes, **caractérisé en ce que** le fusible de sécurité (32) est réalisé par une diminution de section transversale (38) sous la forme d'une ouverture (40) ménagée dans le collecteur (20), qui est reliée à la borne plus (14) de l'élément galvanique (10).

6. Elément galvanique selon la revendication précédente, **caractérisé en ce que** l'ouverture (40) est réalisée sous la forme d'une fente longitudinale (42).

7. Elément galvanique selon l'une quelconque des revendications précédentes, **caractérisé en ce qu'**une membrane en acier inoxydable/nickel (46) déformable est respectivement associée à la borne moins (12) ainsi qu'à la borne plus (14) dans le boîtier en acier inoxydable (34) et **en ce qu'**un dispositif de protection contre la surcharge (26) est associé à chacune des bornes (12, 14).
